(19) Europäisches Patentamt
European Patent Office
Office européen des brevets

(11) **EP 3 423 315 B1**

(12) **EUROPEAN PATENT SPECIFICATION**

(45) Date of publication and mention
of the grant of the patent:
**15.06.2022  Bulletin 2022/24**

(21) Application number: **17707320.2**

(22) Date of filing: **27.02.2017**

(51) International Patent Classification (IPC):
**B60T 8/171** *(2006.01)*     **B60T 8/1761** *(2006.01)*
**B60T 8/172** *(2006.01)*

(52) Cooperative Patent Classification (CPC):
**B60T 8/171; B60T 8/172; B60T 8/17616;**
B60T 2210/124

(86) International application number:
**PCT/EP2017/054455**

(87) International publication number:
**WO 2017/148842 (08.09.2017 Gazette 2017/36)**

(54) **METHOD FOR IMPROVING THE PERFORMANCE OF AN ANTILOCK BRAKING AND ANTI-SLIP REGULATION OF A VEHICLE**

VERFAHREN ZUR VERBESSERUNG DER LEISTUNG EINER ANTIBLOCKIER- UND ANTISCHLUPFREGELUNG EINES FAHRZEUGES

PROCÉDÉ POUR AMÉLIORER LA PERFORMANCE D'UN SYSTÈME D'ANTIBLOCAGE DES ROUES ET DE RÉGULATION D'ANTIPATINAGE D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **03.03.2016  IT UA20161336 U**

(43) Date of publication of application:
**09.01.2019  Bulletin 2019/02**

(73) Proprietor: **ITT Italia S.r.l.**
**20020 Lainate (IT)**

(72) Inventors:
• **SERRA, Stefano**
**12032 Barge (CN) (IT)**
• **MARTINOTTO, Luca**
**20025 Legnano (Milano) (IT)**
• **DONZELLI, Daniele**
**10062 Luserna San Giovanni (Torino) (IT)**
• **TERRANOVA, Marco**
**10149 Torino (IT)**

(74) Representative: **Rapisardi, Mariacristina**
**Ufficio Brevetti Rapisardi S.r.l.**
**Via Serbelloni, 12**
**20122 Milano (IT)**

(56) References cited:
**EP-A1- 0 601 681     EP-A1- 0 748 730
EP-A2- 0 189 076     WO-A1-2014/170726
DE-A1- 10 006 012     DE-A1-102010 010 482
GB-A- 2 372 825**

**Description**

As known, antilock braking systems (ABS) aim to avoid the locking of vehicle wheels in response to excessive actuation of the service brake especially on slippery ground thus ensuring, within the limits of physical possibility, control over driving for any type of vehicle.

Furthermore, with an ABS system, exploitation of the forces of adhesion between the tires and the ground is improved thus optimizing the deceleration characteristics and braking distance of the vehicle.

It should also be considered that during a braking event on slippery ground, due to the reduced values of friction between the tire and the ground, the braking force transmitted by the braking system to the wheels of the vehicle easily exceeds the value of the force of friction between the tire and the ground, with the result that the wheels lock.

In this situation, the tires simply slide with respect to the ground only with the dynamic tire/road value of friction (low) and they can hardly transmit any lateral guiding force, i.e., the steering and pitch forces, with the consequence that the vehicle is no longer controllable, and the braking distance greatly increases.

Consequently current antilock braking systems can ensure more stable braking behavior on all terrains, they preserve the steering capacity and usually shorten the braking distance, and, not least, they reduce tire wear.

However, current antilock braking systems, while being effective safety devices, cannot completely neutralize the limits of traveling physics which may be the actual vehicle speed and the actual tire/ground coefficient of friction measured in real time.

Currently, also mounted on vehicles, are anti-slip regulation systems (ASR). Such ASR systems are particularly useful in motor vehicles as well as in unloaded or partially loaded commercial vehicles since, in the presence of ground with poor adhesion, an excessive increase in engine power or acceleration easily leads to the maximum force of adhesion on one or all of the drive wheels being exceeded, with the consequence of slipping.

The application of the ASR system on a vehicle requires only an electronic control unit expanded for the ASR function and some additional components for adjusting the differential braking and driving force, in order to transform an ABS system into a complete ABS/ASR adjustment device.

Therefore, the ASR system is only available in combination with the ABS system.

In summary, it can be stated that the ABS system depends upon the coefficient of friction which is generated between the tire and the ground and is influenced by the condition of the ground and the state of the tires, by the load on the wheels or on the axles, by the vehicle speed, by the temperature and by the angle of drift of the tires or by the lateral guidance force.

In particular, in ABS antilock braking systems the fixed sensor connected to the axle, with the aid of the phonic wheel, continuously detects the respective rotary movement of the wheel. The electrical pulses generated within the sensor are transmitted to the electronic ABS control unit, which then calculates the speed of the wheel.

At the same time the electronic ABS control unit, according to a determined operating mode, detects a reference speed that is almost equivalent to the actual speed of the vehicle. This speed may for example be detected by means of GPS or else by means of an on-board accelerometer by means of which the speed of the vehicle can be reconstructed. However in both cases, as is known, such a measurement does not have a real degree of precision.

From all of this information the electronic ABS control unit continuously calculates the acceleration values of the wheel or else the wheel delay and braking slippage values.

In the case of a given value of slippage being exceeded, the solenoid valve that reduces the pressure of the hydraulic system to the braking pads is piloted thereby maintaining the wheel in an ideal slipping range.

It follows from that which has already been mentioned that even the most sophisticated control units currently on the market, and consequently the most sophisticated ABS and ASR systems, can only and exclusively analyze the data and information transmitted by those mechanical parts of the vehicle that are currently designated for this purpose.

By way of example, a current ABS/ASR system cannot detect, other than the actual speed of the vehicle and the actual coefficient of friction between the tire and the ground, any possible mechanical errors in the control valves, in particular errors that cause roadholding failure and pressure loss that can only be identified within the scope of correctly checking the braking system as per the respective errors of the other braking devices.

As regards the control logic currently available with more sophisticated commercial ABS systems it is possible to state that it is based upon three different types of variables, i.e., the estimated speed of the vehicle, the angular rotation of the wheels and the angular acceleration of the wheels. With regard to estimating speed, as has been seen, a GPS unit or the accelerometer on-board the vehicle is used, or, in the case of applications, the speed of the vehicle is estimated on the basis of the "fastest diagonal" value, i.e., based upon the maximum value of estimated speed from the rotational speed of the wheels on two diagonals, the front right wheel and the rear left wheel, and vice versa. Instead, the angular rotations and accelerations of the wheels are obtained by direct acquisition using the so-called phonic wheel.

In summary it can be stated that there are two main points that render the ABS logic currently available defective under certain circumstances, and in particular the fact that the means of estimating the actual speed are not effective at low speed (20 km/h) or with low braking pressure and the fact that the means for measuring the coefficient of friction are simple estimates, given that both the maximum slippage and the longitudinal forces depend upon 1) the tire-ground coefficient of friction that continuously varies and 2) the accuracy of the estimators of the speed of the vehicle and of the phonic wheel which estimates the speed and the angular acceleration of the vehicle wheel.

The conditions laid down in point 1 are for example verified for braking applications on slippery surfaces such as ice and other conditions wherein one pair of wheels is on a low-adhesion surface and the second pair on a high adhesion surface, and when an abrupt change in adhesion occurs on the ground during the use of the brakes.

With regard to point 2 a series of strategies and algorithms have been used in order to improve the measurement of vehicle speed as a function of the speed of rotation and angular acceleration of the wheel.

In some cases more advanced algorithms are employed that make use of Kalman filtering techniques in combination with the particular use of an especially refined pneumatic model in order to estimate the tire-ground friction and slippage values which are then used to refine the final estimate. However, whatever the level of sophistication obtained by these algorithms, they are still only estimates that can repeatedly fail on slippery surfaces, or due to tire wear and aging effects thereof, for which reason the data tend to become less accurate and the interferences within the data managed by the ABS controller increase.

To overcome the aforesaid limitations of the state of the art, technology based upon force measurements directly on the wheel has been developed by SKF using force sensors integrated into the wheel bearing (accelerometers and strain gauges). However, this method has not yet had a practical application, especially given that the data collected are subject to significant inaccuracies arising from the fact that the measurable forces are very small and therefore hardly detectable with accuracy compared to the forces acting upon the wheel while driving the vehicle. This problem also occurs with force sensors (accelerometers) associated with tires wherein the longitudinal forces are great but there is considerable uncertainty concerning the data collected due to wear and tear of the tires.

An antilock braking system using piezoelectric force sensor or stress sensor means is disclosed in documents DE 10 2010 010 482 A1 and EP 0 748 730 A1 respectively.

The objective of the present invention is to eliminate the state of the art drawbacks complained of above. As part of this aim, one objective of the invention is to design a method for improving the performance of an antilock braking and anti-slip system of a vehicle that allows for the instant detection of the actual coefficient of friction of the tire in relation to the ground during the activation of the vehicle's brakes.

A further objective of the invention is to design a method for improving the performance of an antilock braking and anti-slip system of a vehicle that allows for the use of further mechanical parts of the vehicle in order to provide additional data that is suitable for the management of the antilock braking and anti-slip system. A further objective of the invention is to design a method for improving the performance of an antilock braking and anti-slip system of a vehicle that allows for the updating in real time of the actual coefficient of friction measurement during braking.

A further objective of the invention is to design a method for improving the performance of an antilock braking and anti-slip system of a vehicle that allows for the continuous adjustment of the braking pressure profile of the vehicle to the value of the actual tire/ground coefficient of friction generated during the entire braking interval.

A further objective of the invention is to design a method for improving the performance of an antilock braking and anti-slip system of a vehicle that allows for the setting of the optimal deceleration profile for the specific value of the actual coefficient of friction detected.

A further objective of the invention is to design a method for improving the performance of an antilock braking and anti-slip system of a vehicle that allows the slippage and/or wheel speed and acceleration thresholds to be fixed in order to maintain an ideal deceleration profile.

A further objective of the invention is to design a method for improving the performance of an antilock braking and anti-slip system of a vehicle that allows for improvement in the reliability of the control logic and in the performance thereof under all conditions of use.

A further objective of the invention is to design a method for improving the performance of an antilock braking and anti-slip system of a vehicle that allows for an additional ABS system control parameter to be obtained in order to verify the actual stopping of the vehicle with respect to the ground or the sliding thereof with locked wheels in order to record the actual system operating conditions.

Not least, an objective of the invention is to design a method for improving the performance of an antilock braking and anti-slip system of a vehicle that can be applied to any type of vehicle equipped with any ABS and/or ASR and/or ESC (Electronic Stability Control) system.

This objective as well as these and other objectives are achieved by a method for improving the performance of an antilock braking (ABS) and/or anti-slip regulation (ASR) and/or electronic stability control (ESC) system for a vehicle comprising the features of independent claim 1.

Further characteristics of the present invention are further defined in the subordinated claims.

Additional features and benefits of the invention will become more evident from the description of a preferred but non exclusive embodiment of a method for improving the performance of an antilock braking and anti-slip system of a vehicle illustrated by way of a nonlimiting example in the accompanying drawings wherein:

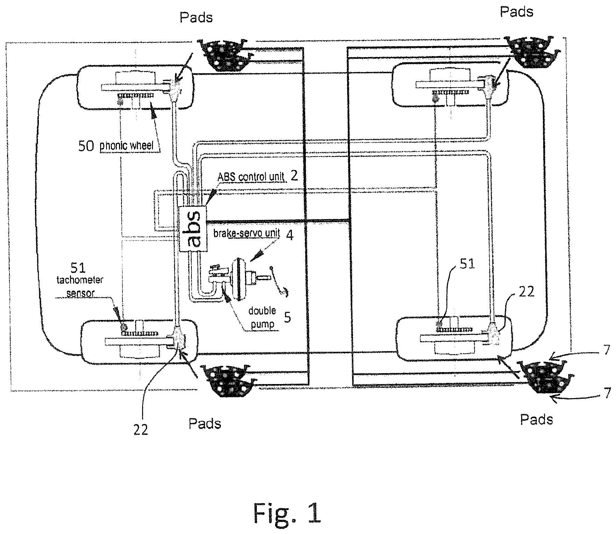

Figure 1 is a schematic view of the device for carrying out the invention.
Figure 2 is a schematic view of the brake pad for carrying out the invention.
Figure 3 is a schematic view of the architecture of the control unit for carrying out the invention.
Figure 4 shows the change in angular velocity and pressure in a braking application according to the invention.
Figure 5 shows the typical behavior of the pair of intelligent pads according to the invention in a braking application.
Figure 6 shows the change in braking pressure in order to keep it close to the best value according to the invention.
Figure 7 is a control scheme for the system with brake pads according to the invention with a traditional ABS system and
Figure 8 is a torque measurement scheme using brake pads according to the invention.

With reference to the figures cited the device and method for improving the performance of an antilock braking (ABS) and anti-slip regulation (ASR) system of a vehicle comprising at least an oil or air fluid-dynamic system for controlling the braking pressure composed of at least an ABS management control unit indicated with 2 and possibly of an ASR management control unit 3, a brake-servo unit 4 and an hydraulic oil or air pressure pump 5. The braking system normally also comprises solenoid valves and pipes for oil or air and at least phonic wheels 50 and tachometer sensors 51 respectively, one for each wheel 9 of the vehicle equipped with ABS.

Hereinafter, the application of the invention to an ABS system will be considered insofar as the same characteristics and claims are also applicable to an ABS/ASR system.

Further, hereinafter, reference will be made to a motor vehicle equipped with disc brakes but this is applicable to any type of vehicle including trucks, trailers, cranes, up to airplanes.

The device advantageously includes additional intelligent sensors, generically indicated with 6, associated with at least one brake pad 7 acting upon the brake disk 8 of each wheel 9 for the measurement of additional data. The device also has at least one dedicated ECU control unit 10 for the management of the additional data and for interacting with the ABS and/or ASR control unit.

The additional sensors 6 consist of an electronic circuit 11 integrated into the backplate of the pad and preferably obtained by means of screen-printing and that is resistant to high temperatures near to or above 300°C.

The electronic circuit 11 includes a piezoceramic shear force sensor 12 and a temperature sensor 13 arranged on the backplate in specific positions of the screen-printed circuit, and soldered in those positions.

To close the electronic circuit and allow for connection to external electronic systems, connection means 14 are inserted in order to collect the signals provided by the shear force 12 and temperature 13 sensors integrated into the backplate.

In addition to that, in order to ensure electrical insulation and mechanical protection, a protective cover 15 is placed over said sensors 12 and 13 and any conductive part of the circuit.

This preferably can be implemented with special "domes" made of resin or ceramic insulating materials that are not represented.

Finally all of the items described above are embedded within the friction material of the pad or, if present, within the underlayer. In this case, the friction material will lie above the underlayer.

With regard to the sensors to be integrated into the brake pads for ABS applications, the minimum configuration will have a piezoceramic shear force sensor 12 for high temperature at least > 200°C, (Curie temperature) and preferably with an operating temperature > 300°C and a temperature sensor 13 (PT1000) preferably with an operating temperature > 300°C. Advantageously the electronic circuit 11 also comprises a shear sensor 16 preferably positioned at the pressure center of the pad based upon the dimensions and geometric form thereof.

The temperature sensor 13 must be located preferably as close as possible to the shear sensor 16. The temperature sensor is used mainly for the purposes of compensation.

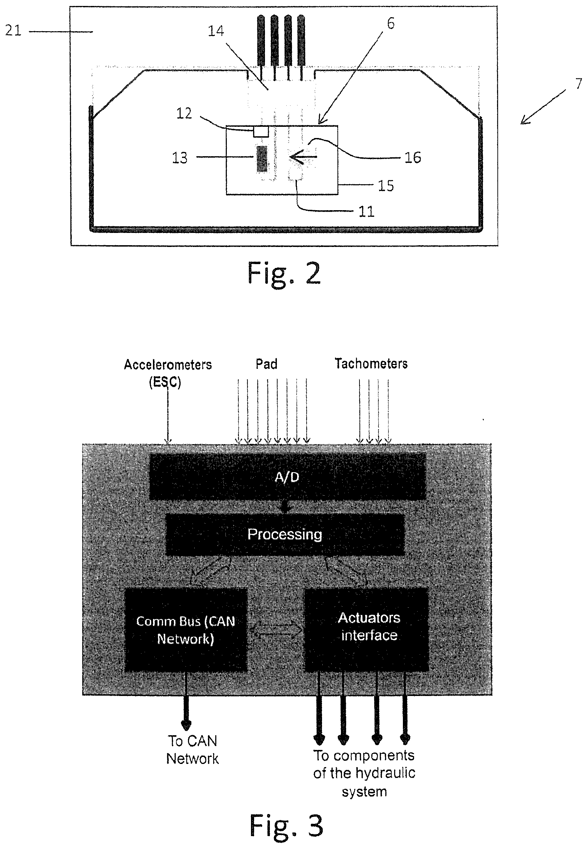

In Figure 2, the shear sensor 16 carries the arrow 21 that displays the direct polarization along the tangential forces applied to the pad while applying the braking, which forces are directly related to the braking torque measurements.

It is clear that the embodiment shown in Figure 2 is just one of the possible solutions, insofar as the relative positions of the sensors can be changed or other additional sensors can be added.

For example, four or also only two piezoceramic pressure sensors could be positioned close to the upper corners of the rectangle representing the backplate 21, in order to measure the orthogonal force transmitted by the caliper piston of the pad during braking applications.

In addition, bi-axial or tri-axial piezoelectric sensors can be used, not represented, in order to supply more information than a single shear force sensor 12.

These additional sensors have only an auxiliary function, in that they can be used to optimize the distribution of pressure or to determine the disk-pad coefficient of friction in order to optimize braking efficiency.

Hereinafter, dedicated ECU control unit 10 according to the invention, refers to a control unit with operational logic that is physically separate from the ABS control unit or integrated into the standard ABS control unit which in this case will have physical and/or analog inputs for the data signals detected by the brake pad/s.

In both cases the dedicated control unit 10 interacts with the standard ABS control unit.

In both solutions described above, the dedicated ECU control unit 10 will have a CPU or a data processing unit with real time processing capabilities and a digital communication interface, generally CANBUS, and logic that is designed to integrate the signals from the brake pads both physically and in terms of data that need be integrated into the processing algorithms and into the control logics of the standard ABS control unit.

The main information provided by the data from the pad 7, with regard to the ABS application, is the braking torque applied during braking to the corresponding wheel 9 of the vehicle. This is measured in real time by the pad 7 by means of the shear sensor 16 integrated therein.

The reason for this is linked to the longitudinal forces that act upon the tire/ground contact area during all braking applications, and that determine the dynamics of the wheel and therefore of the vehicle.

It is in fact possible to recognize that there are two main forces acting upon the wheel within the tire/ground contact area during the application of braking on smooth and flat terrain: the force due to the braking torque applied during braking by the friction of the brake pads against the disk, and the tire/ground contact surface reaction force, again a tire/ground force of friction.

In the absence of traction forces, or of ground with a negative or positive slope, the equation of motion for the wheel will be:

$$|M_f| = |F_x|R_w - J\frac{d\omega}{dt}$$

Where $F_x$ is the longitudinal braking force, $R_w$ is the effective radius of the wheel, $M_f$ is the braking moment applied by the shear forces against the brake disks summing together the contributions from the braking torque of both of the intelligent pads 7 of the same caliper 22, and, finally J is the moment of inertia and $\omega$ is the angular velocity of the wheel 9.

From this equation it is clear that, at the moment when the wheel locks, the torque and the moment of the longitudinal forces within the tire/ground contact area must be equal.

We can therefore conclude that with these assumptions and under these conditions, and with $F_x = \mu N$ where N is the known vertical load on the wheel and $\mu$ is the tire/ground coefficient of friction, the braking torque when the wheel locks will be directly related to the tire/ground force of friction:

$$M_{f\_lim} = |F_x|\,\mathrm{Rw} = \mu N\,\gamma = f(\mu)$$

where $\gamma$ is a constant in the first approximation.

It must be said that the value of $\mu$ measured in this case is the so-called $\mu_{slide}$, i.e., the value of the ratio between $F_x$ and N when the wheels are locked, rather than so-called $\mu_{peak}$ which is the value of the ratio between $F_x$ and N when $F_x$ assumes its maximum value during braking before the locking of the wheels is verified.

Notwithstanding this, $\mu_{slide}$ will clearly be related to $\mu_{peak}$ in all tires, and will therefore be a good estimate for $\mu_{peak}$.

With this technical solution the value of the measured coefficient of friction $\mu$ is advantageously still directly related to the value of $\mu_{peak}$ and is still smaller and can result in inefficiencies in the application of braking based upon this value alone.

The value of $M_{f\text{-}lim}$, determined as above is useful for determining whether the wheels are slipping and in particular whether the wheels are locked but the vehicle is in motion.

This can happen, for example, every time the control logic of a standard ABS fails on a slippery surface (ice).

This method can be used to detect whether it is the wheels that are slipping while locked during braking, or, if the vehicle is stationary, the wheel is stationary and the brakes have not been applied.

In effect, the first condition implies:

- $\omega = 0$ e $M_{(f\text{-}lim)} \neq 0$ and usually much larger than 0 also for small values of $\mu$, typically tens of Nm

The second:

- $\omega = 0$ e $M_{(f\text{-}lim)} = 0$ or very small, i.e. < 1 Nm

A different technical solution is based upon the abrupt change in the slope of the wheel's angular velocity $\omega$ (t)

detected during an application of the braking, when approaching $M_{f-lim}$, i.e., when the braking forces tend to become larger than the forces of friction available within the ground/tire contact area.

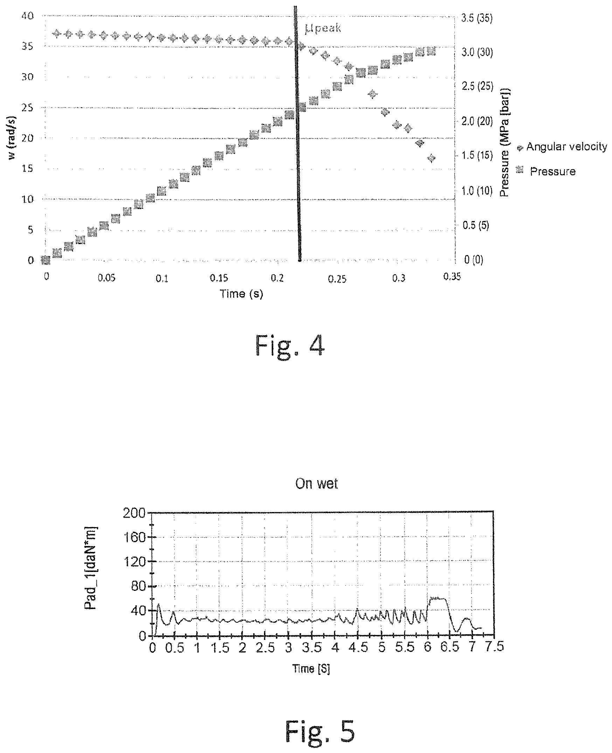

As can be seen in Figure 4, the hydraulic pressure in the caliper 22 initially increases almost linearly while the corresponding values of angular velocity decrease.

In the absence of sliding within and around the tire tread area the condition of pure rolling (low slippage values) implies that the forces within the tire/ground contact area due to the braking torque and those forces from the friction with the ground will be equal and opposite.

This will be true up to the value of $\mu_{peak}$ for longitudinal forces corresponding to the tire/ground contact area.

From this point on, any increase in braking pressure (and therefore the braking torque) will no longer be offset by the forces of friction.

The consequence will be the observation of a sudden and rapid change in the slope of the curve $\omega$ (t) due to an imbalance between the braking torque and the moments of the forces of friction, as seen in Figure 4 corresponding to the black vertical solid line.

From this basic observation, the dedicated control unit 10 obtains the correct value of $M_{f-Lim.}$ and can operate as follows:

1. Detect $\omega$ (t) during the application of braking
2. Check for abrupt changes in the slope of the curve $\omega$ (t) for example when the maximum reference threshold is exceeded
3. consider $M_{f-lim}$ to be the torque value M just before the change in the slope of the curve of $\omega$ (t) Once the new value of $M_{f-lim}$ is determined, the dedicated ECU control unit 10 repeats the same logical steps using the same procedure described above in order to obtain the final value of $\mu_{peak}$ to use in place of the means of estimation based upon models and algorithms used to calculate friction in standard ABS control units.

In view of the above, the control logic of the dedicated ECU control unit 10 based upon the data received from the pad 7 has two distinct methods: a method based upon slippage and a method based upon torque.

In a first solution the method that is the subject of matter the invention, is based upon the tire slippage on the ground.

The main objective of this method is to keep the ABS operation as close as possible to that of a standard commercial ABS but with two major improvements:

1. The friction estimators are replaced with actual measurements of the value of $\mu$
2. The effective tire-ground friction is constantly updated while applying the braking

Thus the torque data from the pad 7 are used to adjust the braking pressure profile to the value of the actual friction during braking.

The result is an ideal braking effect and a faster response to changing friction conditions or abnormal situations.

With reference to the typical profile of the torque curve, shown in Fig. 5, obtained from a pad 7 calibrated at 1 kHz during a braking application with ABS at an initial speed of 30 km/h on a slippery surface (coefficient of friction of approximately $\mu$ = 0.2).

The actual value of $\mu$ as explained above is obtained after the initial braking application phase, when the braking torque is increased up to the point of locking the wheels.

After the identification of the value of $\tau_{lim}$ (torque limit), the reference value for the available friction $\mu$ is calculated by the dedicated control unit 10 by means of a function $\mu(\tau_{lim})$ that can be easily derived from the vertical load on the wheel and other parameters relating to the properties of the specific vehicle's braking system.

Once these two values are registered by the dedicated control unit 10, they are used as a reference for the control logic of the standard ABS to:

1. Set the ideal deceleration profile for that specific value of $\mu$
2. For setting the slippage or speed and acceleration thresholds of the wheels in order to maintain the ideal deceleration profile.

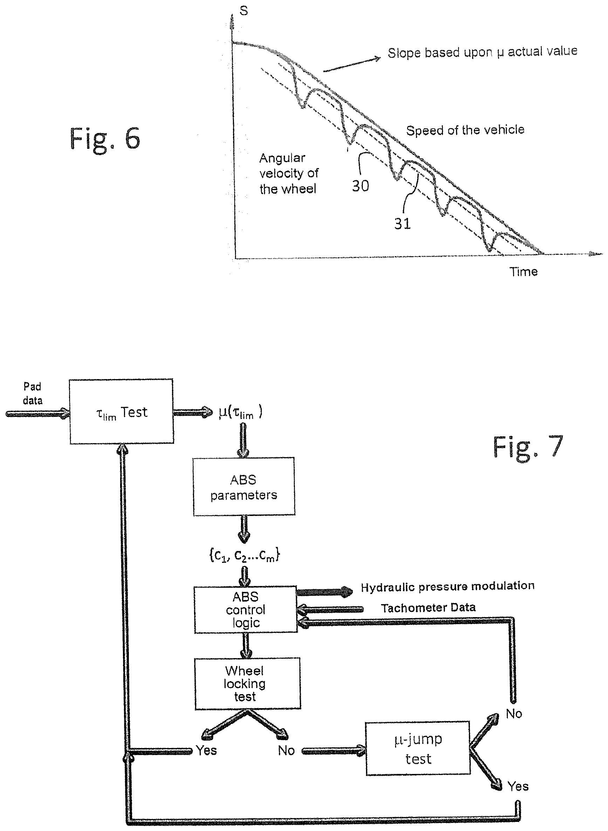

Figure 6 schematically illustrates this logic scheme: in particular, a profile of speed over time is shown, whilst braking pressure modulation is performed in order to keep the deceleration close to the ideal deceleration curve based upon the actual measured value of $\mu$ ($\tau_{lim}$).

The pressure modulation is obtained by means of standard threshold lines (based on slippage or speed of rotation) in order to open and close the hydraulic valves of the hydraulic system connected to the ABS control unit.

These reference lines for the peripheral speed of the wheel (rotational speed of the wheel) are marked with 30 and 31 and with dashed lines in Figure 6.

They define thresholds for the activation of the hydraulic pressure control valves.

In particular in exceeding, from top to bottom, the threshold indicated with 30, the braking pressure is increased, while in exceeding the threshold indicated with 31, from bottom to top, the braking pressure will be decreased.

A similar logic can also be obtained using the peripheral acceleration rather than the velocity of the wheel, with corresponding value thresholds for the acceleration.

Whenever any change occurs to the tire/ground coefficient of friction $\mu$, the control logic in the dedicated control unit 10 must be capable of retrieving the new correct value of $\mu$ ($\tau_{lim}$).

For changes of the value of a decreasing $\mu$, the new value is easily and naturally retrieved by taking the new $\tau_{lim}$ for the wheel locking condition (obviously less than before), and calculating the new $\mu$ ($\tau_{lim}$).

This new value is used to generate a new set of parameters for the control logic of the dedicated control unit 10.

This set of parameters will for example be the deceleration objective, i.e., the slope of the vehicle speed curve, or the speed or acceleration thresholds.

This new set of parameters will be used to update the preceding ones and used in the control logic of the dedicated ECU control unit 10 to replace the previous parameters.

In the case of an increase in the value of $\mu$, the control logic must be able to recognize the $\mu$-Jump condition.

This can occur, for example by introducing a periodic increase in the peripheral deceleration of the wheel (by means of a periodic increase in the modulation pressure) in order to test for the increase in $\mu$ when applying the brakes.

This could be performed, for example with a period of 0.1 s, according to the required degree of response for the ABS control logic.

Another possibility could be that of verifying a change in the slope of the peripheral speed curves during normal pressure modulations.

In fact, an increase in the value of $\mu$ would cause a reduction in the angular velocity modulations of the wheel during braking, and therefore this specific condition in variation could be used in order to enable the procedure for a new determination of $\tau_{lim}$.

A logical flow diagram is then shown in fig. 7.

1. The first "Test $\tau_{lim}$" block is the evaluation of the maximum value of the torque performed at the start of the application of the braking, or as a result of a change to the tire/ground coefficient of friction obtained by means of the pad 7;

2. The "ABS parameters" block uses the actual value of the tire-ground coefficient of friction $\mu$ in order to set the ABS parameters ($c_0$, $c_1$, $c_2$... $c_m$) used by the ABS control logic, as optimized for that specific value of $\mu$. Predetermined values can be used for this purpose and optimized for such parameters, arranged in lookup tables for efficient use within the control logic.

3. The "ABS Logic Control" block represents a standard ABS control logic (for example on the basis of slippage or methods based upon acceleration/peripheral speeds) that will depend upon specific parameters ($c_0$, $c_1$, $c_2$... $c_m$) relating to the specific control logic used (they could for example be speed or acceleration value thresholds) and will depend upon the actual value of $\mu$ ($\tau_{lim}$) measured.

4. The "$\mu$-Jump test" block is the test for variations towards larger values of $\mu$ during braking applications. This test is performed on the basis of time or on the basis of condition (for example, depending upon peripheral speed variations detected with increased braking pressure).

The overall control logic is an adaptive control scheme for an ABS system that makes use of an existing ABS control logic, but that improves it by means of the addition of a more refined ABS operation optimization based upon the actual braking torque value, and its variations during braking applications.

As a result, optimization of the actual braking performance will be obtained.

The second method, object of the invention, is based upon the braking torque and aims to exploit the full potential of the pad 7, which will consequently improve the reliability of the control logic and performance under all conditions.

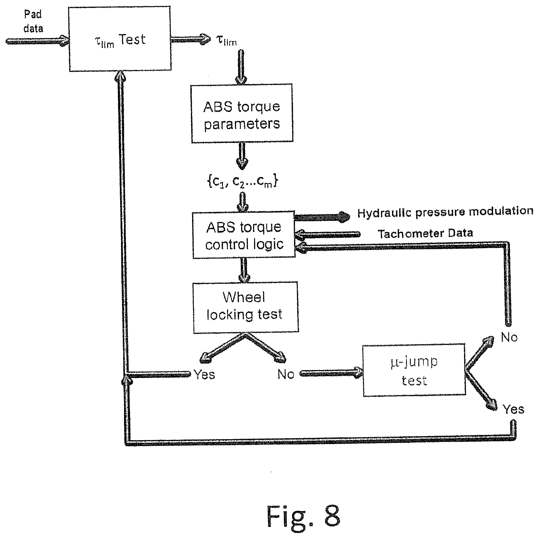

As shown in Figure 8, the block diagram of this new control logic is similar, but there are significant differences in the main blocks and in how they are used within the control logic.

The first difference is based upon the final result of the first test, which provides the maximum value of braking torque, i.e., the value above which the slope of the curve of the angular velocity of the wheel abruptly changes while applying the braking. This torque value is used as a reference value for the hydraulic pressure modulation of the brake using a specific command sent by the ABS ECU control unit.

Whenever an abrupt change in the rotation of the wheel is detected, the torque limit value $\tau_{lim}$ is updated, and the cycle repeated.

In addition to that, as in the previous control logic, the periodic evaluation of the presence of the $\mu$-Jump

conditions can be set, periodically increasing the braking pressure in order to perform the locked wheel test and thus changing (increasing) the new torque limit if the condition is verified, or continuing to use the previous limit if said condition is not verified.

The block diagram of Figure 8, can be summarized as follows:

- The first "$\tau_{lim}$ Test" block is the evaluation of the limit value for the braking torque performed by means of the pad 7 at the start of the application of the braking or as a consequence of a variation in the tire/ground coefficient of friction

- The "Torque ABS parameter" block uses the effective value of the torque limit value $\tau_{lim}$ in order to set the ABS parameters ($c_0$, $c_1$, $c_2$.. $c_m$) used by the ABS control logic which, in essence, will comprise at least thresholds for those values concerning the slope of $\omega_{lim}$ (t) and the effective value of $\tau_{lim}$. The full list of parameters naturally depends upon the details of the control logic that is adopted. In principle, these parameters may be predetermined and used in the ABS control logic by means of lookup tables for efficient use within the control logic insofar as it is dependent upon the actual measured value for $\tau_{lim}$, as is normally implemented in order to reduce computational and system costs and to increase the calculation speed.

- The "Torque ABS Logic Control" block, added with respect to the previous case, is an ABS control logic based upon the torque measured at the brake pads by means of controlling the hydraulic pressure of the brakes in order to keep the braking torque as close as possible to $\tau_{lim}$. A further control is set on the variation in the slope of the single values of $\omega$ (t) during the application of braking as measured by the phonic wheel without any reference to the estimate of the "true" speed of the vehicle. The latter control is used to take account of changes in the coefficients of friction towards lower values that will be promptly compensated for by the control logic. In addition to that, the general condition of stability (EBD) where $\omega_f > \omega_r$, i.e., the front wheel must turn at a higher speed than the rear wheel, will complete the basic control logic for this new class of ABS control logic.

- The "$\mu$-Jump" block is the test for variations in $\mu$ toward higher values during braking applications. This test is performed on the basis of time or on the basis of condition (for example, depending upon peripheral speed variations detected with increased braking pressure).

As has been indicated in the above block diagram, the main difference in this control logic with respect to a standard one is the elimination of any estimate of the speed of the wheel as a resource for the control logic for the modulation of the pressure controlled by the dedicated control unit 10 and interacting with the standard ABS control unit installed on the vehicle.

This can be implemented owing to the fact that the actual braking torque during the application of braking is known and that said torque can be controlled in real time.

The obvious advantage is the elimination of any inefficiency deriving from the wrong or approximate determination of the actual speed of the vehicle, which is used in the control logic for controlling the braking intensity pressure, but rather the ideal braking force is always used over the whole braking distance.

Also, as an added benefit, the uncertainties relating to the estimation of the potential friction associated with the control logic of current ABS/ESC systems are eliminated.

A further advantage comes from the fact that the dedicated control unit 10 receives a further control parameter from the cross-check between $\omega$ and $\tau_{lim}$ in order to verify that the vehicle has actually stopped (vehicle stationary with respect to the ground) or for the presence of slippage (wheels locked), which can be used to recover conditions that are not effectively recoverable with standard ABS systems.

The device and method for improving the performance of an antilock and/or anti-slip system of a vehicle have been tested on a track.

In the first set of results as shown by the graphs below, the typical trend of the torque measured by the pad 7 is shown during a braking application with ABS under two different ground conditions. On the left side of Figure 13 we show the torque data measured by four pads 7 on the front wheels (two per caliper) under dry conditions. In this case it is known that the surface has a coefficient of friction of about 1 (slightly greater).

While applying the braking, we see that the torque values continue to remain quite stable with small oscillations around an average value of 400 daNm.

Considering that the radius of the wheel is approximately 0.32 m, and taking the double data contribution provided by a pair of brake pads acting on that wheel, there is a longitudinal braking force within the total tire/ground contact area of about 5000 N.

If we compare this value with the typical Pacejcka curve for longitudinal forces, see for example fig. 3, we can see that this value is very close to the peak limit for longitudinal force for the values of the coefficient of friction close to 1.

This means that the ABS is working well under these conditions and that only marginal improvements can be expected even with the application of the system according to the invention.

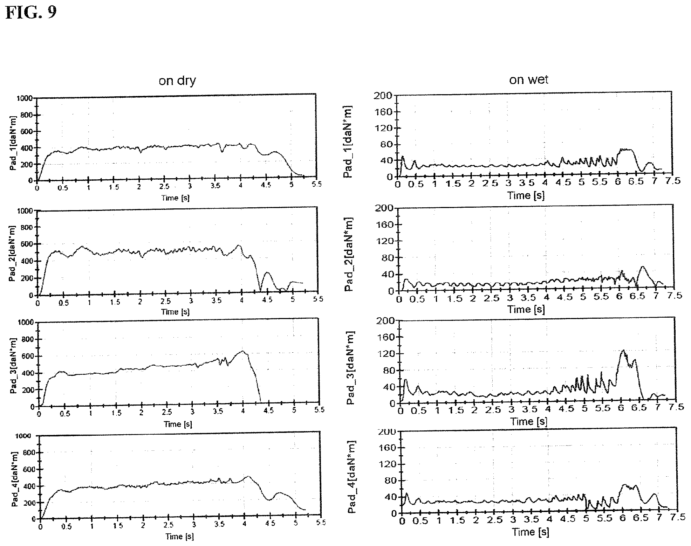

The right-hand charts show the corresponding torque results with the application of braking with ABS on slippery surfaces (see figure 9).

In particular a wet slippery surface is considered, which corresponds to a coefficient of friction of about 0.2 (between 0.1 and 0.2, but closer to 0.2).

We can now see that the performances of the ABS system appear to be very different.

In fact, the fluctuations are much greater and the stability of the torque is much lower with respect to the dry conditions.

In addition, the average value of total torque at the wheel is 64 daNm, corresponding to a total longitudinal force at the wheel of approximately 410 N.

If we look at the graphs below we can see the vehicle speed measured during the tests, which for an important part of the braking application the ABS system kept the deceleration close to that expected for a coefficient of friction of about 0.1, proving that in this case the friction estimator operated inaccurately.

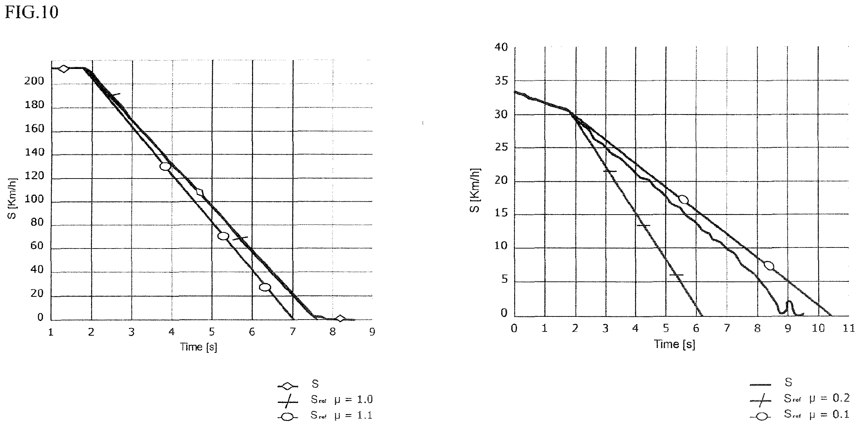

To the right the ideal deceleration profiles are shown for friction values of 0.1 and 0.2, together with the actual speed profile of the vehicle during braking (see figure 10).

Again we can see the parallel between the straight line at a coefficient of friction of 0.1 and the actual speed profile at the central part of the graph.

At the beginning and end, we can instead see that the slope of the actual speed profile becomes closer to the ideal slope of the deceleration profile with a friction value of 0.2.

In other words, we can also see from the speed profiles that the friction estimation means of commercial ABS systems fail to obtain the correct values of a low $\mu$ and that for most of the braking period this value is underestimated.

From the torque perspective, it can be observed that at the beginning and end of the braking application the torque values were in fact larger with respect to the central portion, giving rise to greater braking force.

It is important to underline that this was not due to actual changes to the coefficient of friction of the ground, which was homogeneous and closer to 0.2.

It should be noted that the test was conducted on an area of a particular test circuit for wet conditions, with known and controlled surface conditions, the underestimation can therefore be attributed to the poor performance and inefficiency of the commercial ABS control logic, as previously stated.

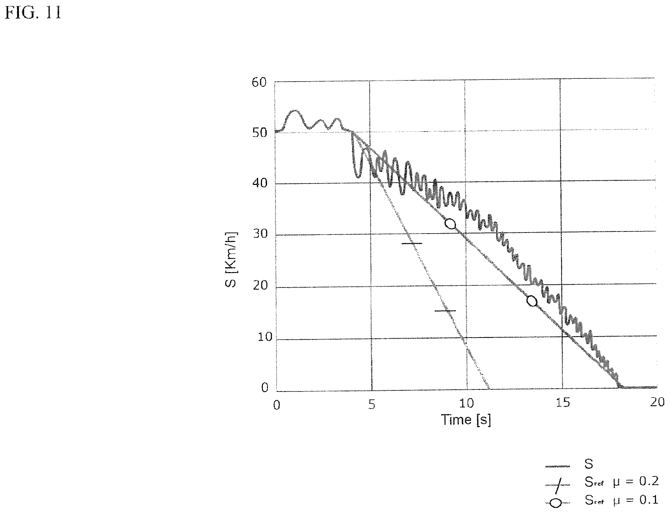

A further and final demonstration of what we are saying is reflected in figure 11.

In these graphs the results of two braking applications under the same conditions are shown (the same surface, the same coefficient of friction, the same car, the same commercial control logic and ABS system) obtained in quick succession in order to maintain identical conditions.

We can see that, even though the conditions are the same, the two ABS braking applications are very different and involve very different stopping times and therefore very different distances.

In both cases the friction estimator operated poorly, underestimating the coefficient of friction for a substantial part of the braking period.

The main differences in the application of the two braking events are evident from the amount of time passed with an estimated value for the coefficient of friction that is closer to the actual value (0.2).

In terms of braking distance, the overall effect of the underestimation of the coefficient of friction leads to an increase in the stopping distance of approximately 4 m at an initial speed of 30 km/h for the previously examined case in the right panel, also assuming an average value for the coefficient of friction of 0.15, while it will be 8 m if we assume a coefficient of friction of 0.2. For the case represented above, there is an increase in the stopping distance of 10 m for the case in the left panel and about 5 m for the case in the right panel at an initial speed of 50 km/h.

The following table shows the results of the operating logic of the dedicated control unit. 10 according to the invention for an ABS system based upon an actual measurement of the coefficient of friction, compared to a commercial ABS system with a known control logic, in terms of braking distance with an initial speed of 100 km/h.

| $\mu$ Coefficient | Commercial ABS | Dedicated control unit, object of the invention | Difference % |
|---|---|---|---|
| 0.9 | 50.5 | 45.7 | - 9.5% |
| 0.5 | 90.1 | 80.7 | - 10.3% |
| 0.3 | 153.5 | 13 9.1 | - 9.3% |

In terms of absolute distance the benefits obtained with the use of data from a brake pad 7 and the use of a dedicated control unit 10 greatly increases the control of the vehicle even with slippery ground surfaces while it tends to become negligible when the coefficient of friction, and therefore the control of the vehicle, increases with the recovery of adhesion on the ground.

The invention thus conceived is susceptible to numerous modifications and variations all falling within the scope of the invention as defined by the appended claims.

**EP 3 423 315 B1**

**Claims**

1.  Method for improving the performance of an antilock braking (ABS) and/or anti-slip regulation (ASR) and/or electronic stability control (ESC) system of a vehicle for controlling braking pressure comprised of at least one standard ABS management control unit and at least phonic wheels (50) and tachometer sensors (51) respectively present one for each wheel of the vehicle, and further comprising additional shear force sensors (16) associated with at least one of the brake pads (7) acting upon the brake disk of each wheel in order to collect additional data and at least one dedicated ECU control unit for managing said additional data and interacting with at least said ABS control unit, said additional sensors (16) being present in an electronic circuit (11) integrated into a support of the brake pad (7) and providing braking torque values applied during braking to the corresponding wheel (9) of the vehicle, wherein the braking pressure profile is adjusted based on the actual value calculated of the coefficient of friction present between the tire and the ground during the braking of the vehicle, said actual friction coefficient being calculated by detecting from said shear sensors (16) the limit braking torque at the moment when the wheel locks, or the braking pressure profile is adjusted based on detection from said shear sensors (16) of the limit braking torque at the moment just before an abrupt change in the slope of the wheel's angular velocity occurs during an application of the braking.

2.  Method for improving the performance of an antilock braking (ABS) and/or anti-slip regulation (ASR) and/or electronic stability control (ESC) system of a vehicle according to claim 1, wherein said electronic circuit is obtained by means of screen-printing, resistant to high temperatures.

3.  Method for improving the performance of an antilock braking (ABS) and/or anti-slip regulation (ASR) and/or electronic stability control (ESC) system of a vehicle according to one or more of the preceding claims, wherein said shear force sensor (16) is piezoceramic, and in that on said integrated circuit (11) is also provided a temperature sensor (13) arranged on the said support in specific positions of the screen-printed circuit and soldered in those positions.

4.  Method for improving the performance of an antilock braking (ABS) and/or anti-slip regulation (ASR) and/or electronic stability control (ESC) system of a vehicle according to one or more of the preceding claims, wherein said pad (7) comprises connection means (14) designed to gather all of the signals derived from said temperature and shear force sensors integrated into said support and to close the said electronic circuit and allow for connection with external electronic systems.

5.  Method for improving the performance of an antilock braking (ABS) and/or anti-slip regulation (ASR) and/or electronic stability control (ESC) system of a vehicle according to one or more of the preceding claims, wherein said electronic circuit comprises a protective cap (15) placed on top of said sensors in order to ensure electrical insulation and mechanical protection simultaneously with optimal transmission of the force.

6.  Method for improving the performance of an antilock braking (ABS) and/or anti-slip regulation (ASR) and/or electronic stability control (ESC) system of a vehicle according to one or more of the preceding claims, wherein said pad (7) measures the braking torque applied that is detected in real time by means of a shear sensor (16) associated thereto, said braking torque being measured in order to assess whether it is the wheels of said vehicle that are slipping while locked or if said vehicle is stationary.

7.  Method for improving the performance of an antilock braking (ABS) and/or anti-slip regulation (ASR) and/or electronic stability control (ESC) system of a vehicle according to one or more of the preceding claims, wherein said pad (7), together with said dedicated control unit, detects when the braking forces are greater than the maximum value of the longitudinal forces (Fx) available within the contact area between the tire and the ground detecting a possible unbalance thereof.

8.  Method for improving the performance of an antilock braking (ABS) and/or anti-slip regulation (ASR) and/or electronic stability control (ESC) system of a vehicle according to one or more of the preceding claims, further comprising detecting by means of said pad and said dedicated control unit the maximum value of the longitudinal force (Fx) available within the contact area between the tire and the ground, which is constantly updated during braking using the braking torque data derived from said brake pad in order to modulate the braking pressure profile adjusting it to the maximum value detected for the longitudinal force (Fx) available within the contact area between the tire and the ground.

9.  Method for improving the performance of an antilock braking (ABS) and/or anti-slip regulation (ASR) and/or electronic stability control (ESC) system of a vehicle according to one or more of the preceding claims, further comprising detecting the value of the longitudinal force (Fx) available within the contact area between the tire and the ground with locked wheels obtained after the initial braking application phase, when the braking torque is increased up to a limit value corresponding to the locking of the wheels, identifying said braking torque limit value corresponding to the value of the detected longitudinal force (Fx), calculating a reference value for said braking torque limit by means of a function derived from the vertical load on the wheel and other parameters relating to the characteristics of the braking system of the vehicle.

10. Method for improving the performance of an antilock braking (ABS) and/or anti-slip regulation (ASR) and/or electronic stability control (ESC) system of a vehicle according to the preceding claim, further comprising using said torque limit reference value and said longitudinal force (Fx) value detected as reference data for the control logic of the standard ABS control unit, in order to set the ideal deceleration profile for that specific value of longitudinal force (Fx) detected and to settle the slippage or speed and acceleration thresholds of the wheels in order to maintain the ideal deceleration profile.

11. Method for improving the performance of an antilock braking (ABS) and/or anti-slip regulation (ASR) and/or electronic stability control (ESC) system of a vehicle according to claim 9 or 10, wherein at every change detected in said value of the longitudinal force (Fx), the control logic recovers the correct new value of said torque limit in such a way that the new values will be used to update the preceding values and used within the control logic of the said dedicated control unit substituting the preceding values.

12. Method for improving the performance of an antilock braking (ABS) and/or anti-slip regulation (ASR) and/or electronic stability control (ESC) system of a vehicle according to one or more of the preceding claims, wherein it uses said torque limit value as a reference value for the hydraulic pressure modulation of the brake by means of a specific command sent by said dedicated ECU control unit to said standard ABS.

13. Method for improving the performance of an antilock braking (ABS) and/or anti-slip regulation (ASR) and/or electronic stability control (ESC) system of a vehicle according to one or more of the preceding claims, wherein whenever an abrupt change in the rotation of the wheel is detected, the value of said torque limit will be updated, and the cycle repeated.

14. Method for improving the performance of an antilock braking (ABS) and/or anti-slip regulation (ASR) and/or electronic stability control (ESC) system of a vehicle according to one or more of the preceding claims, wherein a periodic evaluation can be set for the presence of conditions of an increasing value of the detected longitudinal force (Fx) due to a $\mu$-Jump condition, periodically increasing the braking pressure in order to test for wheel locking and increasing the new torque limit value if the condition is verified, or continuing to use the old value, if the condition is not verified.

15. Method for improving the performance of an antilock braking (ABS) and/or anti-slip regulation (ASR) and/or electronic stability control (ESC) system of a vehicle according to one or more of the preceding claims, further comprising evaluating the limit value for the braking torque performed at the start of the braking application or as a result of a change to the tire/ground coefficient of friction, in using the actual value of the value of said torque limit to set and manage the parameters from the control logic of said dedicated control unit, said control logic of said dedicated control unit comprising at least threshold values for the slope of the angular velocity value and/or maximum angular acceleration of the wheels and the actual value of said torque limit, said parameters being based upon the torque measured at the brake pads (7) by means of checking the hydraulic pressure of the brakes in order to keep the braking torque as close as possible to said torque limit.

16. Method for improving the performance of an antilock braking (ABS) and/or anti-slip regulation (ASR) and/or electronic stability control (ESC) system of a vehicle according to one or more of the preceding claims, further comprising fusing a further control parameter derived from the cross-check between the angular velocity of the wheels and said torque limit in order to verify that the vehicle has actually stopped with respect to the ground or for the presence of slippage with locked wheels in order to recover conditions that are not actually recoverable with standard ABS systems.

**Patentansprüche**

1. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs zum Steuern des Bremsdrucks, bestehend aus zumindest einer Standard-ABS-Management-Steuereinheit und zumindest phonischen Rädern (50) und Tachometersensoren (51), die jeweils für jedes Rad des Fahrzeugs vorhanden sind, und ferner umfassend zusätzliche Scherkraftsensoren (16), die zumindest einem der Bremsbeläge (7), die auf die Bremsscheibe jedes Rads einwirken, zugeordnet sind, um zusätzliche Daten zu sammeln, und zumindest eine dedizierte ECU-Steuereinheit zum Verwalten der zusätzlichen Daten und zum Interagieren mit zumindest der ABS-Steuereinheit, wobei die zusätzlichen Sensoren (16) in einer elektronischen Schaltung (11), die in einem Träger des Bremsbelags (7) integriert ist, vorhanden sind und Bremsmomentwerte bereitstellen, die während des Bremsens auf das entsprechende Rad (9) des Fahrzeugs angewendet werden, wobei das Bremsdruckprofil basierend auf dem tatsächlichen Wert angepasst wird, der aus dem während des Bremsens des Fahrzeugs zwischen dem Reifen und dem Boden vorhandenen Reibungskoeffizienten berechnet wird, wobei der tatsächliche Reibungskoeffizient durch Erfassen des Grenzbremsmoments von den Schersensoren (16) in dem Moment, in dem das Rad blockiert, berechnet wird, oder das Bremsdruckprofil basierend auf der Erfassung des Grenzbremsmoments von den Schersensoren (16) in dem Moment kurz vor Auftreten einer abrupten Änderung der Steigung der Winkelgeschwindigkeit des Rads während einer Anwendung der Bremse angepasst wird.

2.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach Anspruch 1, wobei die elektronische Schaltung mittels Siebdruck, beständig gegen hohe Temperaturen, erhalten wird.

3.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei der Scherkraftsensor (16) piezokeramisch ist, und wobei auf der integrierten Schaltung (11) auch ein Temperatursensor (13) vorgesehen ist, der auf dem Träger in bestimmten Positionen der Siebdruckschaltung angeordnet ist und in diesen Positionen verlötet ist.

4.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei der Belag (7) Verbindungsmittel (14) umfasst, die so ausgelegt sind, dass sie alle der von den Temperatur- und Scherkraftsensoren, die in dem Träger integriert sind, abgeleiteten Signale erfassen und die elektronische Schaltung schließen und eine Verbindung mit externen elektronischen Systemen ermöglichen.

5.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei die elektronische Schaltung eine Schutzkappe (15) umfasst, die auf den Sensoren angeordnet ist, um gleichzeitig eine elektrische Isolierung und einen mechanischen Schutz bei optimaler Übertragung der Kraft sicherzustellen.

6.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei der Belag (7) das angewendete Bremsmoment, das mittels eines diesem zugeordneten Schersensors (16) in Echtzeit erfasst wird, misst, wobei das Bremsmoment gemessen wird, um zu beurteilen, ob die Räder des Fahrzeugs im blockierten Zustand rutschen oder ob das Fahrzeug steht.

7.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei der Belag (7), zusammen mit der dedizierten Steuereinheit, erfasst, wenn die Bremskräfte größer als der Maximalwert der innerhalb des Kontaktbereichs zwischen dem Reifen und dem Boden verfügbaren Längskräfte (Fx) sind, wobei ein mögliches Ungleichgewicht dieser erfasst wird.

8.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, ferner umfassend Erfassen, mittels des Belags und der dedizierten Steuereinheit, des Maximalwerts der innerhalb des Kontaktbereichs zwischen dem Reifen und dem Boden verfügbaren Längskraft (Fx), der während des Bremsens ständig unter Verwendung der von dem Bremsbelag abgeleiteten Bremsmomentdaten aktualisiert wird, um das Bremsdruckprofil zu modulieren und es auf den Maximalwert, der für die innerhalb des Kontaktbereichs zwischen dem Reifen und dem Boden verfügbare Längskraft (Fx) erfasst wurde, anzupassen.

9.  Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, ferner umfassend Erfassen des Werts der innerhalb des Kontaktbereichs zwischen dem Reifen und dem Boden mit blockierten Rädern verfügbaren Längskraft (Fx), die nach der anfänglichen Bremsbetätigungsphase erhalten wurde, wenn das Bremsmoment bis zu einem Begrenzungswert erhöht wird, der dem Blockieren der Räder entspricht, Identifizieren des Bremsmomentbegrenzungswerts, der dem Wert der erfassten Längskraft (Fx) entspricht, Berechnen eines Referenzwerts für die Bremsmomentbegrenzung mittels einer Funktion, die aus der vertikalen Belastung des Rads und anderen Parametern im Zusammenhang mit den Eigenschaften des Bremssystems des Fahrzeugs abgeleitet wird.

10. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach dem vorhergehenden Anspruch, ferner umfassend Verwenden des Drehmomentbegrenzungsreferenzwerts und des erfassten Werts der Längskraft (Fx) als Referenzdaten für die Steuerlogik der Standard-ABS-Steuereinheit, um das ideale Verzögerungsprofil für den erfassten spezifischen Wert der Längskraft (Fx) einzustellen und den Schlupf oder die Geschwindigkeits- und Beschleunigungsschwellenwerte der Räder auszugleichen, um das ideale Verzögerungsprofil aufrechtzuerhalten.

11. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach Anspruch 9 oder 10, wobei bei jeder festgestellten Änderung des Werts der Längskraft (Fx), die Steuerlogik den korrekten neuen Wert der Drehmomentbegrenzung derart wiederherstellt, dass die neuen Werte zur Aktualisierung der vorhergehenden Werte verwendet werden und innerhalb der Steuerlogik der dedizierten Steuereinheit verwendet werden, wobei sie die vorhergehenden Werte ersetzen.

12. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei es den Drehmomentbegrenzungswert als einen Referenzwert für die hydraulische Druckmodulation der Bremse mittels eines spezifischen Befehls, der von der dedizierten ECU-Steuereinheit an das Standard-ABS gesendet wird, verwendet.

13. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei immer dann, wenn eine abrupte Änderung der Drehung des Rads erfasst wird, der Wert der Drehmomentbegrenzung aktualisiert wird und der Zyklus wiederholt wird.

14. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, wobei eine periodische Bewertung für das Vorliegen von Bedingungen eines ansteigenden Werts der erfassten Längskraft (Fx) aufgrund einer $\mu$-Sprungbedingung eingestellt werden kann, wobei der Bremsdruck periodisch erhöht wird, um auf ein Blockieren des Rads zu prüfen, und der neue Drehmomentbegrenzungswert erhöht wird, wenn die Bedingung verifiziert wird, oder der alte Wert weiterhin genutzt wird, wenn die Bedingung nicht verifiziert wird.

15. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, ferner umfassend Bewerten des Begrenzungswerts für das Bremsmoment, das zu Beginn der Bremsbetätigung oder infolge einer Änderung des Reifen/Boden-Reibungskoeffizienten durchgeführt wird, bei Verwenden des tatsächlichen Werts des Werts der Drehmomentbegrenzung, um die Parameter von der Steuerlogik der dedizierten Steuereinheit einzustellen und zu verwalten, wobei die Steuerlogik der dedizierten Steuereinheit zumindest Schwellenwerte für die Steigung des Winkelgeschwindigkeitswerts und/oder der maximalen Winkelbeschleunigung der Räder und den tatsächlichen Wert der Drehmomentbegrenzung umfasst, wobei die Parameter auf dem Drehmoment basieren, das an den Bremsbelägen (7) mittels Überprüfen des hydraulischen Drucks der Bremsen gemessen wird, um das Bremsmoment möglichst nah an der Drehmomentbegrenzung zu halten.

16. Verfahren zum Verbessern der Leistung eines Antiblockiersystems (ABS) und/oder einer Antriebsschlupfregelung (ASR) und/oder eines elektronischen Stabilitätsprogramms (ESP) eines Fahrzeugs nach einem oder mehreren der vorhergehenden Ansprüche, ferner umfassend Verwenden eines weiteren Steuerparameters, der aus der Gegenprüfung zwischen der Winkelgeschwindigkeit der Räder und der Drehmomentbegrenzung abgeleitet wird, um zu verifizieren, dass das Fahrzeug tatsächlich in Bezug auf den Boden angehalten hat, oder für das Vorhandensein von Schlupf bei blockierten Rädern, um Bedingungen wiederherzustellen, die mit Standard-ABS-Systemen nicht wirklich wiederherstellbar sind.

## Revendications

1. Procédé d'amélioration des performances d'un système antiblocage des roues (ABS) et/ou de régulation antipatinage (ASR) et/ou de régulation électronique de la stabilité (ESC) d'un véhicule pour réguler la pression de freinage, composé d'au moins une unité de commande de gestion ABS standard et au moins de roues phoniques (50) et capteurs tachymétriques (51) présents respectivement, un pour chaque roue du véhicule, et comprenant en outre des capteurs de force de cisaillement supplémentaires (16) associés à au moins une des plaquettes de frein (7) agissant sur le disque de frein de chaque roue afin de collecter des données supplémentaires et au moins une unité de commande ECU dédiée destinée à gérer lesdites données supplémentaires et à interagir avec au moins ladite unité de commande ABS, lesdits capteurs supplémentaires (16) étant présents dans un circuit électronique (11) intégré dans un support de la plaquette de frein (7) et fournissant des valeurs relatives au couple de freinage appliqué pendant le freinage à la roue (9) correspondante du véhicule, le profil de pression de freinage étant réglé en fonction de la valeur réelle calculée du coefficient de frottement existant entre le pneu et le sol pendant le freinage du véhicule, ledit coefficient de frottement réel étant calculé grâce à la détection, par lesdits capteurs de cisaillement (16), du couple de freinage limite au moment auquel la roue se bloque, ou bien le profil de pression de freinage étant réglé en fonction de la détection, par lesdits capteurs de cisaillement (16), du couple de freinage limite existant juste avant qu'une variation brutale de la pente de la vitesse angulaire de la roue ne se produise pendant une application du freinage.

2. Procédé d'amélioration des performances d'un système antiblocage des roues (ABS) et/ou de régulation antipatinage (ASR) et/ou de régulation électronique de la stabilité (ESC) d'un véhicule selon la revendication 1, dans lequel ledit circuit électronique est obtenu au moyen d'une impression par sérigraphie résistant à des températures élevées.

3. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, dans lequel ledit capteur de force de cisaillement (16) est en céramique piézoélectrique, et un capteur de température (13) est également prévu sur ledit circuit intégré (11) en étant disposé sur ledit support dans des positions spécifiques du circuit imprimé par sérigraphie et soudé dans ces positions.

4. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, dans lequel ladite plaquette (7) comprend des moyens de connexion (14) conçus pour collecter tous les signaux provenant desdits capteurs de température et de force de cisaillement intégrés dans ledit support et pour fermer ledit circuit électronique et permettre la connexion avec des systèmes électroniques externes.

5. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, dans lequel ledit circuit électronique comprend un capot de protection (15) placé au-dessus desdits capteurs afin de garantir une isolation électrique et une protection mécanique simultanément à une transmission optimale de la force.

6. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, dans lequel ladite plaquette (7) mesure le couple de freinage appliqué qui est détecté en temps réel au moyen d'un capteur de cisaillement (16) associé à celle-ci, ledit couple de freinage étant mesuré afin d'évaluer si ce sont les roues dudit véhicule qui patinent en position bloquée ou si ledit véhicule est à l'arrêt.

7. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, dans lequel ladite plaquette (7), conjointement avec ladite unité de commande dédiée, détecte le moment auquel les forces de freinage sont supérieures à la valeur maximale des forces longitudinales (Fx) disponibles dans la zone de contact entre le pneu et le sol, détectant un éventuel déséquilibre de celles-ci.

8. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, comprenant en outre la détection, au moyen de ladite plaquette et de ladite unité de commande dédiée, de la valeur maximale de la force longitudinale (Fx) disponible dans la zone de contact entre le pneu et le sol, qui est constamment actualisée pendant le freinage à l'aide des données de couple de freinage provenant de ladite plaquette de frein afin de moduler le profil de pression de freinage en le réglant à la valeur maximale détectée pour la force longitudinale (Fx) disponible dans la zone de contact entre le pneu et le sol.

9. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, comprenant en outre la détection de la valeur de la force longitudinale (Fx), disponible dans la zone de contact entre le pneu et le sol avec des roues bloquées, obtenue après la phase initiale d'application de freinage, lorsque le couple de freinage augmente jusqu'à une valeur limite correspondant au blocage des roues, l'identification de ladite valeur limite du couple de freinage correspondant à la valeur de la force longitudinale (Fx) détectée, et le calcul d'une valeur de référence pour ladite limite de couple de freinage au moyen d'une fonction dérivée de la charge verticale sur la roue et d'autres paramètres relatifs aux caractéristiques du système de freinage du véhicule.

10. Procédé d'amélioration des performances d'un système antiblocage des roues (ABS) et/ou de régulation antipatinage (ASR) et/ou de régulation électronique de la stabilité (ESC) d'un véhicule selon la revendication précédente, comprenant en outre
l'utilisation de ladite valeur de référence de limite de couple et de ladite valeur de force longitudinale (Fx) détectée en tant que données de référence pour la logique de commande de l'unité de commande ABS standard, afin d'établir le profil de décélération idéal pour cette valeur spécifique de force longitudinale (Fx) détectée et de fixer les seuils de patinage ou de vitesse et d'accélération des roues afin de maintenir le profil de décélération idéal.

11. Procédé d'amélioration des performances d'un système antiblocage des roues (ABS) et/ou de régulation antipatinage (ASR) et/ou de régulation électronique de la stabilité (ESC) d'un véhicule selon la revendication 9 ou 10, dans lequel
à chaque changement détecté concernant ladite valeur de la force longitudinale (Fx), la logique de commande récupère la nouvelle valeur correcte de ladite limite de couple de telle manière que les nouvelles valeurs soient utilisées pour actualiser les valeurs précédentes et utilisées au sein de la logique de commande de ladite unité de commande dédiée en remplacement des valeurs précédentes.

12. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, comprenant l'utilisation de ladite valeur limite de couple comme valeur de référence pour la modulation de pression hydraulique du frein au moyen d'une instruction spécifique envoyée par ladite unité de commande ECU dédiée audit ABS standard.

13. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, dans lequel, chaque fois qu'une variation brutale concernant la rotation de la roue est détectée, la valeur de ladite limite de couple est actualisée, et le cycle est répété.

14. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, dans lequel il peut être établi une évaluation périodique de la présence de conditions d'une valeur croissante de la force longitudinale (Fx) détectée due à une condition de microsaut, avec augmentation périodique de la pression de freinage afin de tester le blocage de la roue et augmentation de la nouvelle valeur limite de couple si la condition est vérifiée, ou avec poursuite de l'utilisation de l'ancienne valeur, si la condition n'est pas vérifiée.

15. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, comprenant en outre l'évaluation de la valeur limite pour le couple de freinage réalisé au début de l'application de freinage ou en conséquence d'un changement du coefficient de frottement pneu/sol, et l'utilisation de la valeur réelle de la valeur de ladite limite de couple pour établir et gérer les paramètres à partir de la logique de commande de ladite unité de commande dédiée, ladite logique de commande de ladite unité de commande dédiée comprenant au moins des valeurs de seuil pour la pente de la valeur de vitesse angulaire et/ou l'accélération angulaire maximale des roues et la valeur réelle de ladite limite de couple, lesdits paramètres reposant sur le couple mesuré au niveau des plaquettes de frein (7) au moyen de la vérification de la pression hydraulique des freins afin de maintenir le couple de freinage aussi proche que possible de ladite limite de couple.

16. Procédé d'amélioration des performances d'un système antiblocage des roues (ABS) et/ou de régulation antipatinage (ASR) et/ou de régulation électronique de la stabilité (ESC) d'un véhicule selon une ou plusieurs des revendications précédentes, comprenant en outre l'utilisation d'un paramètre ultérieur de commande provenant de la vérification croisée entre la vitesse angulaire des roues et ladite limite de couple afin de confirmer que le véhicule s'est effectivement arrêté par rapport au sol ou pour la présence d'un patinage avec des roues bloquées afin de récupérer des conditions qui ne sont pas réellement récupérables avec des systèmes ABS standards.

Fig. 1

Fig. 2

Fig. 3

Fig. 4

Fig. 5

Fig. 6

Fig. 7

Fig. 8

FIG. 9

FIG.10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010010482 A1

- EP 0748730 A1